# EUROPÄISCHE PATENTSCHRIFT

(11) **EP 4 441 836 B1**
(45) Veröffentlichungstag und Bekanntmachung des Hinweises auf die Patenterteilung: **22.07.2026**
(21) Anmeldenummer: 22823008.2
(22) Anmeldetag: 29.11.2022
(51) Int. Cl.: F16K 17/00, H01M 50/308, H01G 9/12, H01M 50/342, H01M 50/30

(54) **DRUCKAUSGLEICHSELEMENT**
PRESSURE COMPENSATION ELEMENT
ÉLÉMENT DE COMPENSATION DE PRESSION

(30) Priorität: 02.12.2021 DE 102021131758
(43) Veröffentlichungstag der Anmeldung: 09.10.2024
(73) Patentinhaber: BOGE Elastmetall GmbH, 49401 Damme (DE)
(72) Erfinder: MASSMANN, Ole, 49565 Bramsche (DE); HÄFFELIN, Daniel, 88085 Langenargen (DE); WINDHAUS, Andreas, 49413 Dinklage (DE)
(74) Vertreter: Bossmeyer, Jörg Peter
(86) Internationale Anmeldenummer: PCT/EP2022/083618
(87) Internationale Veröffentlichungsnummer: WO 2023/099450

(56) Entgegenhaltungen:
- WO-A1-2021/190791
- DE-A1- 102019 218 456
- JP-B2- 4 078 519
- US-B2- 10 164 227

## Beschreibung

Die Erfindung betrifft ein Druckausgleichselement mit einem sich in einer axialen Richtung erstreckenden und einen Rohrinnenraum umschließenden Kunststoffrohr, welches an einem ersten Rohrende eine erste Rohröffnung, an einem zweiten Rohrende eine zweite Rohröffnung und im axialen Abstand zu dem ersten Rohrende einen von der Außenumfangsfläche des Kunststoffrohrs radial vorstehenden Anschlag aufweist, und einem sich quer zur axialen Richtung über den Rohrinnenraum erstreckenden und mit mehreren Durchgangsöffnungen versehenen Abschirmblech, welches in einem sich von dem ersten Rohrende bis zu dem Anschlag erstreckenden ersten Rohrabschnitt des Kunststoffrohrs angeordnet und fest mit diesem verbundenen ist, wobei das Abschirmblech an seinem Außenumfang mehrere Rastelemente ausbildet, die im axialen Abstand zu dem Anschlag radial von der Außenumfangsfläche des Kunststoffrohrs im ersten Rohrabschnitt vorstehen und elastisch nach radial innen bewegbar sind.

Die JP 4 078519 B2 offenbart ein Gehäuse mit einer Gehäuseöffnung, die durch eine Dichtungsplatte verschlossen ist, in der eine nach außen offene Ventilausnehmung vorgesehen ist, die in der Dichtungsplatte an einem ebenen, eine Ventilöffnung begrenzenden Ventilsitz endet. In der Ventilausnehmung sitzt ein Ventil mit einer Befestigungsplatte und einer mit dieser fest verbundenen Dichtlichtlippe, deren Spitze in Kontakt mit dem Ventilsitz steht. Die Befestigungsplatte umfasst im Bereich ihres Außenumfangs einen Tellerfederabschnitt, der mehrere durch Schlitze voneinander getrennte Federzungen aufweist, die in einer in der Wandung der Ventilausnehmung eingebrachten Ringnut eingerastet sind. Das Ventil öffnet, wenn der Druck im Gehäuse groß genug ist, um die Schließkraft, mit welcher die Dichtlippe aufgrund ihrer Elastizität gegen den Ventilsitz drückt, zu überwinden, sodass ein die Schlitze umfassender Entlüftungskanal zwischen der Wandung der Ventilausnehmung und der Befestigungsplatte freigegeben wird.

Ein Druckausgleichselement soll möglichst einfach an einem Gehäuse montierbar sein, beispielsweise durch einfaches Einstecken in ein in einer Wandung des Gehäuses vorgesehenes Loch. In diesem Fall besteht aber die Gefahr, dass sich das Druckausgleichselement von dem Gehäuse lösen kann, insbesondere wenn höhere Temperaturen in dem Gehäuse und/oder im Bereich des Druckausgleichselements auftreten. Ferner soll das Abschirmblech möglichst einfach mit dem Gehäuse elektrisch verbindbar sein.

Ausgehend hiervon liegt der Erfindung insbesondere die Aufgabe zugrunde, ein einfach zu montierendes und/oder einfach elektrisch zu kontaktierendes Druckausgleichselement zu schaffen, welches sich vorzugsweise auch bei erhöhter Temperatur nicht von dem Gehäuse löst.

Diese Aufgabe wird erfindungsgemäß durch ein Druckausgleichselement nach Anspruch 1 gelöst. Bevorzugte Weiterbildungen der Erfindung sind in den Unteransprüchen und in der nachfolgenden Beschreibung gegeben.

Ein Druckausgleichselement mit einem sich in einer axialen Richtung erstreckenden und einen Rohrinnenraum umschließenden Kunststoffrohr, welches an einem ersten Rohrende eine erste Rohröffnung, an einem zweiten Rohrende eine zweite Rohröffnung und im axialen Abstand zu dem ersten Rohrende und/oder der ersten Rohröffnung einen von der Außenumfangsfläche des Kunststoffrohrs radial vorstehenden Anschlag aufweist, und einem sich quer zur axialen Richtung über den Rohrinnenraum erstreckenden und mit mehreren Durchgangsöffnungen versehenen Abschirmblech, welches in einem sich von dem ersten Rohrende bis zu dem Anschlag erstreckenden ersten Rohrabschnitt des Kunststoffrohrs angeordnet und fest mit diesem verbundenen ist, wobei das Abschirmblech an seinem Außenumfang mehrere, vorzugsweise in Umfangsrichtung voneinander getrennte, Rastelemente ausbildet, die im axialen Abstand zu dem Anschlag radial von der Außenumfangsfläche des Kunststoffrohrs im ersten Rohrabschnitt vorstehen und elastisch nach radial innen bewegbar sind, ist erfindungsgemäß dadurch weitergebildet, dass jedes Rastelement als schräg zur axialen Richtung verlaufende Federzunge ausgebildet ist, die ein dem Anschlag zugewandtes freies Ende aufweist. Insbesondere sind die Rastelemente im axialen Abstand zu dem Anschlag angeordnet.

Die Rastelemente können nach einem Einstecken des Druckausgleichselements in ein in einer Gehäusewandung vorgesehenes Loch die Gehäusewandung hintergreifen und somit das Druckausgleichselement formschlüssig an der Gehäusewandung sichern. Da die Rastelemente aus dem Abschirmblech gebildet sind, können sie das Druckausgleichselement z.B. auch bei erhöhten Temperaturen sicher an der Gehäusewandung festhalten. Bei Sicherungselementen aus Kunststoff bestünde bei erhöhten Temperaturen hingegen die Gefahr eines Versagens. Ferner ist das Abschirmblech besonders einfach elektrisch mit dem Gehäuse verbindbar, da die Rastelemente durch das Abschirmblech gebildet sind. Während des Einsteckens des Druckausgleichselements in das Loch können sich die Rastelemente z.B. elastisch an den ersten Rohrabschnitt anlegen, wodurch das Einstecken erleichtert wird.

Dem Kunststoffrohr ist bevorzugt eine in axialer Richtung verlaufende Längsachse zugeordnet. Vorzugsweise verläuft die oder eine Längsachse mittig durch das Kunststoffrohr, insbesondere in axialer Richtung. Eine oder jedwede quer zur axialen Richtung und/oder quer zur Längsachse verlaufende Richtung wird insbesondere als radiale Richtung bezeichnet. Eine um die Längsachse und/oder um das Kunststoffrohr und/oder um den Anschlag herum verlaufende Richtung wird vorzugsweise als Umfangsrichtung bezeichnet.

Bei der ersten Rohröffnung handelt es sich bevorzugt um eine Öffnung zu dem Rohrinnenraum. Die erste Rohröffnung wird z.B. auch als Gaseintrittsöffnung bezeichnet. Bei der zweiten Rohröffnung handelt es sich vorzugsweise um eine Öffnung zu dem Rohrinnenraum. Die zweite Rohröffnung wird z.B. auch als Gasaustrittsöffnung bezeichnet. Vorteilhaft erstreckt sich der Rohrinnenraum von der ersten Rohröffnung bis zu der zweiten Rohröffnung, vorzugsweise in axialer Richtung. Der Rohrinnenraum bildet insbesondere einen Gasströmungspfad.

Bevorzugt weist das Kunststoffrohr einen sich in axialer Richtung an den ersten Rohrabschnitt anschließenden zweiten Rohrabschnitt auf. Vorzugsweise ist der Anschlag in oder an dem zweiten Rohrabschnitt vorgesehen. Vorteilhaft erstreckt sich der zweite Rohrabschnitt von dem ersten Rohrabschnitt und/oder von dem Anschlag bis zu dem zweiten Rohrende und/oder der zweiten Rohröffnung, vorzugsweise in axialer Richtung.

Die Rastelemente sind in Umfangsrichtung bevorzugt voneinander getrennt, beispielsweise durch zwischen den Rastelementen vorgesehene Schlitze. Insbesondere sind die Rastelemente in Umfangsrichtung im Abstand zueinander angeordnet. Vorteilhaft sind die Rastelemente rings der Außenumfangsfläche des ersten Rohrabschnitts, vorzugsweise gleichmäßig verteilt, angeordnet.

Das Abschirmblech dient insbesondere zur Abschirmung elektromagnetischer Felder. Bevorzugt ist das Abschirmblech elektrisch leitfähig und/oder besteht aus einem elektrisch leitfähigen Werkstoff. Vorzugsweise ist das Abschirmblech ferromagnetisch und/oder besteht aus einem ferromagnetischen Werkstoff.

Das Abschirmblech besteht aus Metall und/oder aus einem metallischen Werkstoff. Bevorzugt besteht das Abschirmblech aus Federblech. Beispielsweise besteht das Abschirmblech aus Bronze oder Federbronze oder aus einem Eisenwerkstoff, wie z.B. Stahl oder Federstahl.

Das Abschirmblech weist bevorzugt einen Zentralbereich auf, der vorzugsweise eben ist. Insbesondere verläuft der Zentralbereich quer zur axialen Richtung. Vorteilhaft ist der Zentralbereich in dem Rohrinnenraum und/oder im Bereich der ersten Rohröffnung vorgesehen. Bevorzugt verläuft die oder eine Längsachse mittig durch den Zentralbereich, insbesondere in axialer Richtung. Vorzugsweise sind die Durchgangsöffnungen in dem Zentralbereich vorgesehen. Vorteilhaft sind die Durchgangsöffnungen in axialer Richtung durchgehend. Bevorzugt bilden die Durchgangsöffnungen Gasdurchtrittsöffnungen. Insbesondere ist das Abschirmblech gasdurchlässig, vorzugsweise aufgrund der Durchgangsöffnungen. Bevorzugt sind die Rastelemente und/oder ist jedes Rastelement integral mit dem Abschirmblech und/oder mit dem Zentralbereich ausgebildet. Beispielsweise ist jedes Rastelement von dem Abschirmblech und/oder von dem Zentralbereich abgebogen. Vorzugsweise ist jedes Rastelement eben oder im Wesentlichen eben ausgebildet.

Erfindungsgemäß ist jedes Rastelement als schräg zur axialen Richtung verlaufende Federzunge ausgebildet, die ein dem Anschlag zugewandtes freies Ende aufweist und vorzugsweise in Richtung auf den Anschlag zu radial nach außen geneigt verläuft. Vorteilhaft weist jedes freie Ende zu dem Anschlag einen axialen Abstand auf. Bevorzugt weist jede Federzunge eine Federzungenwurzel auf. Vorteilhaft geht jede Federzunge im Bereich ihrer Federzungenwurzel, insbesondere integral, in das Abschirmblech und/oder in den Zentralbereich über. Beispielsweise ist jede Federzunge, insbesondere im Bereich ihrer Federzungenwurzel, von dem Abschirmblech und/oder von dem Zentralbereich abgebogen. Vorteilhaft ist jede Federzunge von ihrer Federzungenwurzel aus in Richtung auf ihr freies Ende radial nach außen geneigt.

Bevorzugt ist der erste Rohrabschnitt, insbesondere bezüglich der Längsachse, rotationssymmetrisch oder im Wesentlichen rotationssymmetrisch. Vorzugsweise ist oder sind der zweite Rohrabschnitt und/oder der Anschlag, insbesondere bezüglich der Längsachse, rotationssymmetrisch oder im Wesentlichen rotationssymmetrisch. Vorteilhaft ist das Kunststoffrohr, insbesondere bezüglich der Längsachse, rotationssymmetrisch oder im Wesentlichen rotationssymmetrisch.

Der erste Rohrabschnitt ist bevorzugt zylindrisch, insbesondere kreiszylindrisch, ausgebildet. Vorzugsweise ist der zweite Rohrabschnitt zylindrisch, insbesondere kreiszylindrisch, ausgebildet. Vorteilhaft ist das Kunststoffrohr zylindrisch, insbesondere kreiszylindrisch, ausgebildet. Beispielsweise ist der Innendurchmesser des Kunststoffrohrs und/oder die Querschnittsfläche des Rohrinnenraums, insbesondere über die axiale Erstreckung des Kunststoffrohrs, konstant.

Bevorzugt ist der Anschlag, insbesondere in Umfangsrichtung, umlaufend ausgebildet. Beispielsweise ist der Anschlag ringförmig und/oder zylindrisch, insbesondere kreiszylindrisch, ausgebildet. Vorzugsweise ist der Außendurchmesser des Anschlags größer als der Außendurchmesser des Kunststoffrohrs oder größer als der Außendurchmesser des Kunststoffrohrs im ersten Rohrabschnitt. Insbesondere ist der Anschlag integral mit dem Kunststoffrohr ausgebildet. Bevorzugt bestehen das Kunststoffrohr und der Anschlag aus demselben oder dem gleichen Material oder Werkstoff.

Das Kunststoffrohr besteht bevorzugt aus einem thermoplastischen Kunststoff. Vorzugsweise ist das Kunststoffrohr als Spritzgussteil ausgebildet und/oder das Kunststoffrohr bildet z.B. ein Spritzgussteil. Vorteilhaft besteht der Anschlag aus thermoplastischem Kunststoff. Vorzugsweise ist das Kunststoffrohr zusammen mit dem Anschlag als Spritzgussteil ausgebildet und/oder das Kunststoffrohr bildet z.B. zusammen mit dem Anschlag ein Spritzgussteil. Das Abschirmblech ist insbesondere mit dem Kunststoff oder Material des Kunststoffrohrs umspritzt.

Das Kunststoffrohr weist bevorzugt eine den Rohrinnenraum begrenzende Rohrwandung auf. Vorzugsweise erstreckt sich das Abschirmblech, insbesondere in radialer Richtung, durch die Rohrwandung hindurch. Vorteilhaft weist das Abschirmblech innerhalb der Rohrwandung mehrere, vorzugsweise axial, durchgehende Ausnehmungen auf, durch welche sich das Material und/oder der Kunststoff der Rohrwandung, insbesondere axial, hindurch erstreckt.

Gemäß einer Ausgestaltung umfasst das Druckausgleichselement eine sich quer zur axialen Richtung über den Rohrinnenraum erstreckende, gasdurchlässige Membran, die fest mit dem Kunststoffrohr verbundenen und vorzugsweise im ersten Rohrabschnitt angeordnet ist. Die Membran ist beispielsweise semipermeabel. Insbesondere ist die Membran wassersperrend und/oder wasserundurchlässig. Bevorzugt erstreckt sich die Membran, insbesondere in radialer Richtung, vorzugsweise randseitig und/oder mit ihrem äußeren Rand, in die Rohrwandung hinein. Vorteilhaft ist die Membran mit dem Kunststoff oder Material des Kunststoffrohrs umspritzt. Die Membran ist vorzugsweise eben ausgebildet. Vorteilhaft ist die Membran in dem Rohrinnenraum und/oder im Bereich der ersten Rohröffnung vorgesehen. Insbesondere verläuft die oder eine Längsachse mittig durch die Membran, vorzugsweise in axialer Richtung. Die Membran ist bevorzugt zwischen dem Abschirmblech und der zweiten Rohröffnung angeordnet und/oder das Abschirmblech ist z.B. zwischen der ersten Rohröffnung und der Membran angeordnet. Somit kann die Membran z.B. ohne Behinderung durch das Abschirmblech bersten, wenn der Druck an der ersten Rohröffnung zu groß wird. Die Membran verläuft insbesondere parallel zum Abschirmblech und/oder zum Zentralbereich des Abschirmblechs. Beispielsweise sind die Membran und das Abschirmblech in enger räumlicher Nähe zueinander angeordnet. Insbesondere ist durch die Membran hindurch ein Gasaustausch möglich, wohingegen ein Durchtritt von Flüssigkeit verhindert ist. Die Membran ist z.B. mit dem Abschirmblech, beispielsweise mittels des Kunststoffrohrs, insbesondere indirekt, verbunden. Ergänzend oder alternativ ist die Membran mit dem Abschirmblech z.B. zusätzlich und/oder direkt verbunden oder integral ausgebildet.

Gemäß einer Weiterbildung ist am Anschlag eine Dichtung vorgesehen, die, insbesondere in Richtung auf den ersten Rohrabschnitt zu, axial von dem Anschlag vorsteht. Bevorzugt ist die Dichtung, insbesondere in Umfangsrichtung, umlaufend ausgebildet. Beispielsweise ist die Dichtung ein Dichtungsring. Bevorzugt besteht die Dichtung aus einem Elastomer. Beispielsweise ist die Dichtung stoffschlüssig mit dem Anschlag verbunden und/oder an diesen angespritzt. Alternativ ist die Dichtung z.B. formschlüssig und/oder kraftschlüssig an dem Anschlag gesichert. Vorzugsweise weist die Dichtung eine oder mehrere, insbesondere konzentrische und/oder koaxiale, Dichtlippen auf. Bevorzugt ist oder sind die Dichtlippen, insbesondere in Umfangsrichtung, umlaufend ausgebildet.

Gemäß einer Ausgestaltung ist die zweite Rohröffnung von einem Deckel abgedeckt. Insbesondere ist in dem Deckel wenigstens eine Gasauslassöffnung vorgesehen. Bevorzugt ist der Deckel topfförmig. Beispielsweise weist der Deckel einen Deckelboden und eine, vorzugsweise in Umfangsrichtung umlaufende, Deckelwandung auf. Vorzugsweise umfasst der Deckel einen Deckelinnenraum, der insbesondere durch den Deckelboden und die Deckelwandung begrenzt ist. Der Deckelboden ist bevorzugt eben ausgebildet und verläuft insbesondere quer zur axialen Richtung. Beispielsweise ist die wenigstens eine Gasauslassöffnung in dem Deckelboden oder in der Deckelwandung vorgesehen. Vorteilhaft sind in der Deckelwandung mehrere, insbesondere radiale, Gasauslassöffnungen vorgesehen, die in Umfangsrichtung insbesondere einen Abstand zueinander aufweisen. Bevorzugt sind die Gasauslassöffnungen rings der Längsachse und/oder in Umfangsrichtung gleichmäßig verteilt angeordnet. Insbesondere mündet das Kunststoffrohr mit seiner zweiten Rohröffnung in den Deckelinnenraum ein. Bevorzugt umgibt und/oder umringt die Deckelwandung den Anschlag und/oder die Deckelwandung läuft um den Anschlag herum. Insbesondere ist die Deckelwandung an dem Anschlag, bevorzugt mittels einer Schnappverbindung, vorzugsweise lösbar, befestigt. Bevorzugt ist der Deckel, insbesondere bezüglich der Längsachse, vorzugsweise unter Vernachlässigung der Gasauslassöffnungen, rotationssymmetrisch oder im Wesentlichen rotationssymmetrisch.

Die Schnappverbindung weist z.B. wenigstens eine in die Außenumfangsfläche des Anschlags einbrachte radiale Vertiefung und wenigstens einen an der Innenumfangsfläche der Deckelwandung vorgesehenen radialen Vorsprung auf, der in die radiale Vertiefung eingerückt ist. Die radiale Vertiefung ist z.B. eine Ringnut. Alternativ kann die radiale Vertiefung auch in die Innenumfangsfläche der Deckelwandung eingebracht und der radiale Vorsprung an der Außenumfangsfläche des Anschlags vorgesehen sein.

Gemäß einer Weiterbildung ist in einer dem ersten Rohrende und/oder der ersten Rohröffnung zugewandten Stirnfläche des Anschlags eine, insbesondere in Umfangsrichtung, umlaufende, vorzugsweise nach radial außen offene, axiale Vertiefung vorgesehen. Bevorzugt liegt die Dichtung in der axialen Vertiefung ein. Vorzugsweise ist die Dichtung von der Deckelwandung, insbesondere in Umfangsrichtung, umgeben und/oder umringt. Somit kann die Dichtung z.B. einfach an dem Anschlag montiert und an diesem durch den Deckel gesichert werden. In einer die axiale Vertiefung nach radial innen begrenzenden Wand des Anschlags ist bevorzugt eine sich radial in diese Wand hinein erstreckende, ringförmige Nut eingebracht, in die ein an der Dichtung vorgesehener radialer Vorsprung eingreift, der insbesondere ringförmig ist.

Das Druckausgleichselement ist bevorzugt für ein Gehäuse vorgesehen, in dem z.B. elektrische und/oder elektronische Komponenten und/oder wenigstens ein elektrischer Energiespeicher angeordnet ist oder sind. Vorzugsweise handelt es sich bei dem Gehäuse um ein Gehäuse einer Antriebsbatterie, welches z.B. auch als Antriebsbatteriegehäuse bezeichnet werden kann. Vorteilhaft ist das Gehäuse ein Antriebsbatteriegehäuse eines Kraftfahrzeugs.

Die Erfindung betrifft insbesondere ferner das oder ein Gehäuse mit einem Gehäuseinnenraum und einer den Gehäuseinnenraum begrenzenden, bevorzugt elektrisch leitfähigen, Gehäusewandung, in der eine oder wenigstens eine, vorzugsweise axiale, Gehäuseöffnung, z.B. in Form eines Lochs, vorgesehen ist. In die Gehäuseöffnung ist das oder ein, insbesondere erfindungsgemäßes, Druckausgleichselement, vorzugsweise mit seinem ersten Rohrabschnitt, insbesondere axial, eingesetzt. Bevorzugt ist ein die Gehäuseöffnung umgebender und/oder um die Gehäuseöffnung herum verlaufender Bereich der Gehäusewandung, insbesondere axial, zwischen dem Anschlag und den Rastelementen angeordnet. Vorteilhaft liegen die Rastelemente, vorzugsweise mit ihren freien Enden, insbesondere axial, vorzugsweise innenseitig, an der Gehäusewandung an. Insbesondere sind die Rastelemente, vorzugsweise dadurch, elektrisch mit der Gehäusewandung verbunden. Bevorzugt ist das Druckausgleichselement mittels des Anschlags und/oder mittels der Rastelemente, vorzugsweise in axialer Richtung, insbesondere formschlüssig, an der Gehäusewandung gesichert, vorzugsweise dadurch, dass die Rastelemente die Gehäusewandung hintergreifen. Ergänzend oder alternativ ist das Druckausgleichselement z.B. mit der Gehäusewandung verklebt und/oder mit dieser verschraubt. Die Gehäusewandung besteht insbesondere aus Metall und/oder umfasst zumindest eine elektrisch leitfähige und/oder metallische Schicht. Bevorzugt liegt der Anschlag, vorzugsweise mit der Dichtung, insbesondere axial, vorzugsweise außenseitig, an der Gehäusewandung an.

In dem Gehäuseinnenraum sind insbesondere elektrische und/oder elektronische Komponenten angeordnet. Beispielsweise ist in dem Gehäuseinnenraum wenigstens ein elektrischer Energiespeicher angeordnet, der z.B. einen oder mehrere Akkumulatoren und/oder einen oder mehrere Kondensatoren umfasst.

Bei dem Gehäuse handelt es sich insbesondere um das Gehäuse einer Antriebsbatterie, sodass das Gehäuse z.B. auch als Antriebsbatteriegehäuse bezeichnet werden kann. Bevorzugt ist das Gehäuse für ein Kraftfahrzeug vorgesehen. Beispielsweise handelt es sich bei dem Gehäuse um ein Antriebsbatteriegehäuse eines Kraftfahrzeugs.

Die Erfindung wird nachfolgend anhand einer bevorzugten Ausführungsform unter Bezugnahme auf die Zeichnung beschrieben. In der Zeichnung zeigen:
Fig.1 eine perspektivische und teilweise aufgeschnittene Ansicht eines Druckausgleichselement gemäß einer Ausführungsform und
Fig. 2 eine Schnittansicht des Druckausgleichselements im eingebauten Zustand.

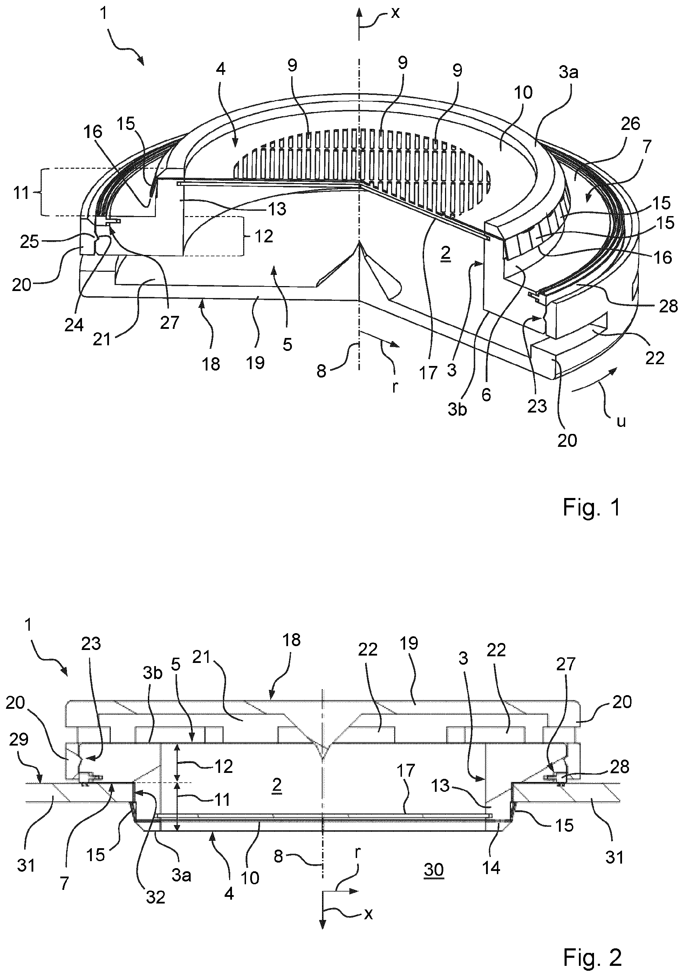

Aus Fig. 1 ist eine perspektivische und teilweise aufgeschnittene Ansicht eines Druckausgleichselements 1 gemäß einer Ausführungsform ersichtlich. Ferner zeigt Fig. 2 eine Schnittansicht des Druckausgleichselements 1 in einem eingebauten Zustand. Das Druckausgleichselement 1 umfasst ein sich in einer axialen Richtung x erstreckendes und einen Rohrinnenraum 2 umschließendes Kunststoffrohr 3, welches an einem ersten Rohrende 3a eine erste Rohröffnung 4, an einem zweiten Rohrende 3b eine zweite Rohröffnung 5 und im axialen Abstand zu dem ersten Rohrende 3a einen von der Außenumfangsfläche 6 des Kunststoffrohrs 3 radial vorstehenden Anschlag 7 aufweist. Auch ist eine sich in axialer Richtung x erstreckende Längsachse 8 dargestellt, die mittig durch das Kunststoffrohr 3 hindurch verläuft. Die erste Rohröffnung 4 wird z.B. auch als Gaseintrittsöffnung bezeichnet.

Das Druckausgleichselement 1 umfasst ferner ein sich quer zur axialen Richtung x über den Rohrinnenraum 2 erstreckendes und mit mehreren Durchgangsöffnungen 9 versehenes Abschirmblech 10, welches in einem sich von dem ersten Rohrende 3a bis zu dem Anschlag 7 erstreckenden ersten Rohrabschnitt 11 des Kunststoffrohrs 3 angeordnet und fest mit diesem verbundenen ist. Ein zweiter Rohrabschnitt 12 des Kunststoffrohrs 3 schließt sich axial an den ersten Rohrabschnitt 11 an und erstreckt sich bis zum zweiten Rohrende 3b. Der Anschlag 7 ist an dem zweiten Rohrabschnitt 12 vorgesehen.

Das Kunststoffrohr 3 weist eine den Rohrinnenraum 2 begrenzende Rohrwandung 13 auf, durch welche sich das Abschirmblech 10 in radialer Richtung r hindurch erstreckt. Ferner weist das Abschirmblech 10 innerhalb der Rohrwandung 13 mehrere axial durchgehende Ausnehmungen 14 auf, durch welche sich das Material der Rohrwandung 3 hindurch erstreckt. An seinem Außenumfang bildet das Abschirmblech 10 mehrere in Umfangsrichtung u voneinander getrennte Rastelemente 15 aus, die im axialen Abstand zu dem Anschlag 7 radial von der Außenumfangsfläche 6 des Kunststoffrohrs 3 im ersten Rohrabschnitt 11 vorstehen. Jedes Rastelement 15 ist elastisch nach radial innen bewegbar und als Federzunge ausgebildet, die in Richtung auf den Anschlag 7 zu radial nach außen geneigt verläuft. Ferner weist jedes Rastelement 15 ein dem Anschlag 7 zugewandtes freies Ende 16 auf.

Das Druckausgleichselement 1 umfasst ferner eine sich quer zur axialen Richtung x über den Rohrinnenraum 2 erstreckende, gasdurchlässige Membran 17, die im ersten Rohrabschnitt 11 angeordnet und fest mit dem Kunststoffrohr 3 verbundenen ist. Die Membran 17 erstreckt sich mit ihrem äußeren Rand in radialer Richtung r in die Rohrwandung 13 hinein und ist insbesondere wassersperrend ausgebildet.

Das Druckausgleichselement 1 umfasst ferner einen Deckel 18, mittels welchem die zweite Rohröffnung 5 abgedeckt ist. Der Deckel 18 weist einen Deckelboden 19 und eine in Umfangsrichtung u umlaufende Deckelwandung 20 auf. Auch umfasst der Deckel 18 einen durch den Deckelboden 19 und die Deckelwandung 20 begrenzten Deckelinnenraum 21, in den das Kunststoffrohr 3 mit der zweiten Rohröffnung 5 einmündet. Ferner sind in der Deckelwandung 20 mehrere in Umfangsrichtung u einen Abstand zueinander aufweisende Gasauslassöffnungen 22 vorgesehen. Die Deckelwandung 20 umringt den Anschlag 7 und ist an diesem mittels einer Schnappverbindung 23 befestigt, die insbesondere eine in die Außenumfangsfläche des Anschlags 7 einbrachte Ringnut 24 aufweist, in welche ein an der Innenumfangsfläche der Deckelwandung 20 vorgesehener radialer Vorsprung 25 eingerückt ist.

In einer dem ersten Rohrende 3b zugewandten Stirnfläche 26 des Anschlags 7 ist eine in Umfangsrichtung u umlaufende, axiale Vertiefung 27 vorgesehen, in welcher eine Dichtung 28 in Form eines Dichtungsrings einliegt. Die Vertiefung 27 ist insbesondere nach radial außen offen. Ferner ist die Dichtung 28 bevorzugt von der Deckelwandung 20 umringt.

Aus Fig. 2 ist eine teilweise Darstellung eines Gehäuses 29 ersichtlich, welches einen Gehäuseinnenraum 30 und eine diesen begrenzende, elektrisch leitfähige Gehäusewandung 31 umfasst, in der eine Gehäuseöffnung 32 vorgesehen ist, in die das zuvor gezeigte Druckausgleichselement 1 mit seinem ersten Rohrabschnitt 11 eingesetzt ist. Dabei ist ein die Gehäuseöffnung 32 umgebender Bereich der Gehäusewandung 31 in axialer Richtung x zwischen dem Anschlag 7 und den Rastelementen 15 angeordnet, die mit ihren freien Enden an der Gehäusewandung anliegen und dadurch elektrisch mit der Gehäusewandung 31 verbunden sind. Ferner ist das Druckausgleichselement 1 durch den Anschlag 7 und die Rastelemente 15 formschlüssig an der Gehäusewandung 31 gesichert. In dem aus Fig. 2 ersichtlichen eingebauten Zustand des Druckausgleichselements 1 liegt die Dichtung 28 axial an der Gehäusewandung 31 an.

### Bezugszeichenliste

- 1: Druckausgleichselement
- 2: Rohrinnenraum
- 3: Kunststoffrohr
- 3a: erstes Rohrende des Kunststoffrohrs
- 3b: zweites Rohrende des Kunststoffrohrs
- 4: erste Rohröffnung / Gaseintrittsöffnung
- 5: zweite Rohröffnung
- 6: Außenumfangsfläche des Kunststoffrohrs
- 7: Anschlag
- 8: Längsachse
- 9: Durchgangsöffnung im Abschirmblech
- 10: Abschirmblech
- 11: erster Rohrabschnitt des Kunststoffrohrs
- 12: zweiter Rohrabschnitt des Kunststoffrohrs
- 13: Rohrwandung
- 14: Ausnehmung in Abschirmblech
- 15: Rastelement / Federzunge
- 16: freies Ende des Rastelements
- 17: Membran
- 18: Deckel
- 19: Deckelboden
- 20: Deckelwandung
- 21: Deckelinnenraum
- 22: Gasauslassöffnung
- 23: Schnappverbindung
- 24: Ringnut
- 25: Vorsprung
- 26: Stirnfläche des Anschlags
- 27: Vertiefung
- 28: Dichtung
- 29: Gehäuse
- 30: Gehäuseinnenraum
- 31: Gehäusewandung
- 32: Gehäuseöffnung

- r: radiale Richtung
- u: Umfangsrichtung
- x: axiale Richtung

## Patentansprüche

1. Druckausgleichselement mit
- einem sich in einer axialen Richtung (x) erstreckenden und einen Rohrinnenraum (2) umschließenden Kunststoffrohr (3), welches an einem ersten Rohrende (3a) eine erste Rohröffnung (4), an einem zweiten Rohrende (3b) eine zweite Rohröffnung (5) und im axialen Abstand zu dem ersten Rohrende (3a) einen von der Außenumfangsfläche (6) des Kunststoffrohrs (3) radial vorstehenden Anschlag (7) aufweist, und
- einem sich quer zur axialen Richtung (x) über den Rohrinnenraum (2) erstreckenden und mit mehreren Durchgangsöffnungen (9) versehenen Abschirmblech (10), welches in einem sich von dem ersten Rohrende (3a) bis zu dem Anschlag (7) erstreckenden ersten Rohrabschnitt (11) des Kunststoffrohrs (3) angeordnet und fest mit diesem verbundenen ist, wobei das Abschirmblech (10) an seinem Außenumfang mehrere Rastelemente (15) ausbildet, die im axialen Abstand zu dem Anschlag (7) radial von der Außenumfangsfläche (6) des Kunststoffrohrs (3) im ersten Rohrabschnitt (11) vorstehen und elastisch nach radial innen bewegbar sind,
**dadurch gekennzeichnet, dass**
- jedes Rastelement (15) als schräg zur axialen Richtung (x) verlaufende Federzunge ausgebildet ist, die ein dem Anschlag (7) zugewandtes freies Ende (16) aufweist.

2. Druckausgleichselement nach Anspruch 1, **dadurch gekennzeichnet, dass** der Anschlag (7) integral mit dem Kunststoffrohr (3) ausgebildet ist, welches aus einem thermoplastischen Kunststoff besteht und zusammen mit dem Anschlag ein Spritzgussteil bildet.

3. Druckausgleichselement nach Anspruch 1 oder 2, **dadurch gekennzeichnet, dass** das Kunststoffrohr (3) eine den Rohrinnenraum (2) begrenzende Rohrwandung (13) aufweist, durch welche sich das Abschirmblech (10) in radialer Richtung (r) hindurch erstreckt.

4. Druckausgleichselement nach Anspruch 3, **dadurch gekennzeichnet, dass** das Abschirmblech (10) innerhalb der Rohrwandung (13) mehrere axial durchgehende Ausnehmungen (14) aufweist, durch welche sich das Material der Rohrwandung (13) hindurch erstreckt.

5. Druckausgleichselement nach einem der vorangehenden Ansprüche, **gekennzeichnet durch** eine sich quer zur axialen Richtung (x) über den Rohrinnenraum (2) erstreckende, gasdurchlässige Membran (17), die im ersten Rohrabschnitt (11) angeordnet und fest mit dem Kunststoffrohr (3) verbundenen ist.

6. Druckausgleichselement nach einem der vorangehenden Ansprüche, **dadurch gekennzeichnet, dass** am Anschlag (7) eine in Umfangsrichtung (u) umlaufende Dichtung (28) vorgesehen ist, die in Richtung auf den ersten Rohrabschnitt (11) axial von dem Anschlag (7) vorsteht.

7. Druckausgleichselement nach einem der vorangehenden Ansprüche, **dadurch gekennzeichnet, dass** die zweite Rohröffnung (5) von einem einen Deckelboden (19) und eine Deckelwandung (20) aufweisenden Deckel (18) abgedeckt ist, der einen Deckelinnenraum (21) umfasst, der durch den Deckelboden (19) und die Deckelwandung (20) begrenzt ist, in der mehrere in Umfangsrichtung (u) einen Abstand zueinander aufweisende Gasauslassöffnungen (22) vorgesehen sind.

8. Druckausgleichselement nach Anspruch 7, **dadurch gekennzeichnet, dass** die Deckelwandung (20) den Anschlag (7) umringt und an diesem mittels einer Schnappverbindung (23) befestigt ist.

9. Druckausgleichselement nach Anspruch 7 oder 8, **dadurch gekennzeichnet, dass** in einer dem ersten Rohrende (3b) zugewandten Stirnfläche (26) des Anschlags (7) eine in Umfangsrichtung (u) umlaufende, nach radial außen offene, axiale Vertiefung (27) vorgesehen ist, in welcher die Dichtung (28) einliegt, die von der Deckelwandung (20) umringt ist.

10. Gehäuse mit einem Gehäuseinnenraum (30) und einer diesen begrenzenden, elektrisch leitfähigen Gehäusewandung (31), in der wenigstens eine Gehäuseöffnung (32) vorgesehen ist, **dadurch gekennzeichnet, dass** in die Gehäuseöffnung (32) ein Druckausgleichselement (1) nach einem der vorangehenden Ansprüche eingesetzt ist, wobei ein die Gehäuseöffnung (32) umgebender Bereich der Gehäusewandung (31) zwischen dem Anschlag (7) und den Rastelementen (15) angeordnet ist, die axial an der Gehäusewandung (31) anliegen und dadurch elektrisch mit dieser verbunden sind.

11. Gehäuse nach Anspruch 10, **dadurch gekennzeichnet, dass** das Druckausgleichselement (1) mittels des Anschlags (7) und der Rastelemente (15) formschlüssig an der Gehäusewandung (31) gesichert ist.

## Claims

1. Pressure compensation element with
- one in an axial direction (x) extending plastic tube (3) enclosing a tube interior (2), which has a first tube opening (4) at a first tube end (3a), a second tube opening (5) at a second tube end (3b) and a stop (7) radially protruding from the outer circumferential surface (6) of the plastic tube (3) in the axial distance to the first tube end (3a), and
- a shielding plate (10) arranged perpendicular to the axial direction (x) extending over the tube interior (2) and provided with several passage openings (9), which shielding plate is arranged in a first tube section (11) of the plastic tube (3) extending from the first tube end (3a) to the stop (7) and is firmly connected to this, wherein the shielding plate (10) forms several locking elements (15) on its outer circumference, which locking elements protrude in a radial direction from the outer circumferential surface (6) of the plastic tube (3) at an axial distance from the stop (7) in the first tube section (11) and are elastically movable in a radial inward direction, **characterised in that**
- each locking element (15) is formed as a flexible tongue running at an angle to the axial direction (x), which flexible tongue has a free end (16) facing the stop (7).

2. Pressure compensation element according to Claim 1, **characterised in that** the stop (7) is formed integrally with the plastic tube (3), which plastic tube is made of a thermoplastic plastic and forms an injection moulded part together with the stop.

3. Pressure compensation element according to either Claim 1 or Claim 2, **characterised in that** the plastic tube (3) has a tube wall (13) delimiting the tube interior (2), through which the shield plate (10) extends in a radial direction (r).

4. Pressure compensation element according to Claim 3, **characterised in that** the shield plate (10) within the tube wall (13) has a plurality of axially continuous recesses (14) through which the material of the tube wall (13) extends.

5. Pressure compensation element according to any one of the preceding claims, **characterised by** a gas-permeable membrane (17) extending transverse to the axial direction (x) over the tube interior 2), which permeable membrane is arranged in the first tube section (11) and is firmly connected to the plastic tube (3).

6. Pressure compensation element according to any one of the preceding claims, **characterised in that** a surrounding seal (28) is provided in the circumferential direction (u) at the stop (7), which seal protrudes in an axial direction from the stop (7) in the direction of the first tube section (11).

7. Pressure compensation element according to any one of the preceding claims, **characterised in that** the second tube opening (5) is covered by a lid (18) having a lid base (19) and a lid wall (20), which lid comprises a lid interior (21) delimited by the lid base (19) and the lid wall (20), in which a plurality of gas outlet openings (22) are provided at a distance from one another in the circumferential direction (u).

8. Pressure compensation element according to Claim 7, **characterised in that** the lid wall (20) surrounds the stop (7) and is fastened thereto by means of a snap connection (23).

9. Pressure compensation element according to either Claim 7 or Claim 8, **characterised in that** a circumferential axial recess (27) is provided in the circumferential direction (u) that is open to the outside in a radial direction in a front face (26) of the stop (7) facing the first tube end (3b), into which recess the seal (28) that is surrounded by the lid wall (20) is inserted.

10. Housing with a housing interior (30) and an electrically conductive housing wall (31) delimiting it in which at least one housing opening (32) is provided, **characterised in that** a pressure compensation element (1) according to any one of the preceding claims is inserted in the housing opening (32), wherein a region of the housing wall (31) surrounding the housing opening (32) is arranged between the stop (7) and the locking elements (15), which locking elements abut the housing wall (31) and are therefore electrically connected to it.

11. Housing according to Claim 10, **characterised in that** the pressure compensation element (1) is secured to the housing wall (31) in a positive-locking manner by means of the stop (7) and the locking elements (15).

## Revendications

1. Élément d'équilibrage de pression comprenant
un tube en matière plastique (3) s'étendant dans une direction axiale (x) et entourant un espace intérieur de tube (2), lequel tube en matière plastique présente, à une première extrémité de tube (3a), une première ouverture de tube (4), à une deuxième extrémité de tube (3b), une deuxième ouverture de tube (5) et, à une distance axiale de la première extrémité de tube (3a), une butée (7) faisant saillie radialement à partir de la surface circonférentielle extérieure (6) du tube en matière plastique (3), et une tôle de blindage (10) s'étendant transversalement à la direction axiale (x) au-dessus de l'espace intérieur de tube (2) et pourvue de plusieurs ouvertures traversantes (9), laquelle est agencée dans une première section de tube (11) du tube en matière plastique (3) s'étendant de la première extrémité de tube (3a) jusqu'à la butée (7) et est reliée fixement à celui-ci, dans lequel la tôle de blindage (10) forme, sur sa circonférence extérieure, plusieurs éléments d'encliquetage (15) qui, à une distance axiale de la butée (7), font saillie radialement à partir de la surface circonférentielle extérieure (6) du tube en matière plastique (3) dans la première section de tube (11) et sont déplaçables élastiquement radialement vers l'intérieur, **caractérisé en ce que**
- chaque élément d'encliquetage (15) est réalisé sous la forme d'une languette ressort s'étendant de manière oblique par rapport à la direction axiale (x), laquelle présente une extrémité libre (16) tournée vers la butée (7).

2. Élément d'équilibrage de pression selon la revendication 1, **caractérisé en ce que** la butée (7) est réalisée d'un seul tenant avec le tube en matière plastique (3), lequel est constitué d'une matière plastique thermoplastique et forme, conjointement avec la butée, une pièce moulée par injection.

3. Élément d'équilibrage de pression selon la revendication 1 ou 2, **caractérisé en ce que** le tube en matière plastique (3) présente une paroi de tube (13) délimitant l'espace intérieur de tube (2), à travers laquelle la tôle de blindage (10) s'étend dans la direction radiale (r).

4. Élément d'équilibrage de pression selon la revendication 3, **caractérisé en ce que** la tôle de blindage (10) présente, à l'intérieur de la paroi de tube (13), plusieurs évidements (14) traversants axialement, à travers lesquels le matériau de la paroi de tube (13) s'étend.

5. Élément d'équilibrage de pression selon l'une des revendications précédentes, **caractérisé par** une membrane (17) perméable aux gaz s'étendant transversalement à la direction axiale (x) au-dessus de l'espace intérieur de tube (2), laquelle est agencée dans la première section de tube (11) et est reliée fixement au tube en matière plastique (3).

6. Élément d'équilibrage de pression selon l'une des revendications précédentes, **caractérisé en ce qu'**un joint d'étanchéité (28) faisant le tour dans la direction circonférentielle (u) est prévu sur la butée (7), lequel fait saillie axialement à partir de la butée (7) en direction de la première section de tube (11).

7. Élément d'équilibrage de pression selon l'une des revendications précédentes, **caractérisé en ce que** la deuxième ouverture de tube (5) est recouverte par un couvercle (18) présentant un fond de couvercle (19) et une paroi de couvercle (20), lequel comprend un espace intérieur de couvercle (21), qui est délimité par le fond de couvercle (19) et la paroi de couvercle (20), dans laquelle plusieurs ouvertures de sortie de gaz (22) espacées les unes des autres dans la direction circonférentielle (u) sont prévues.

8. Élément d'équilibrage de pression selon la revendication 7, **caractérisé en ce que** la paroi de couvercle (20) entoure la butée (7) et est fixée à celle-ci au moyen d'une liaison par encliquetage (23).

9. Élément d'équilibrage de pression selon la revendication 7 ou 8, **caractérisé en ce que**, dans une face frontale (26) de la butée (7) tournée vers la première extrémité de tube (3b), un renfoncement axial (27) faisant le tour dans la direction circonférentielle (u), ouvert radialement vers l'extérieur, est prévu, dans lequel le joint d'étanchéité (28) repose, lequel est entouré par la paroi de couvercle (20).

10. Boîtier comprenant un espace intérieur de boîtier (30) et une paroi de boîtier (31) électriquement conductrice délimitant celui-ci, dans laquelle au moins une ouverture de boîtier (32) est prévue, **caractérisé en ce qu'**un élément d'équilibrage de pression (1) selon l'une des revendications précédentes est inséré dans l'ouverture de boîtier (32), dans lequel une région de la paroi de boîtier (31) entourant l'ouverture de boîtier (32) est agencée entre la butée (7) et les éléments d'encliquetage (15), lesquels reposent axialement contre la paroi de boîtier (31) et sont ainsi reliés électriquement à celle-ci.

11. Boîtier selon la revendication 10, **caractérisé en ce que** l'élément d'équilibrage de pression (1) est sécurisé par complémentarité de forme sur la paroi de boîtier (31) au moyen de la butée (7) et des éléments d'encliquetage (15).
